# EUROPEAN PATENT APPLICATION

(11) **EP 4 660 666 A1**
(43) Date of publication of application: **10.12.2025**
(21) Application number: 25176336.3
(22) Date of filing: 14.05.2025
(51) Int. Cl.: G01S 13/95, G01S 7/41

(54) **WAKE VORTEX PREDICTION USING WEATHER RADAR**

(30) Priority: 07.06.2024 US 202418737770
(71) Applicant: Honeywell International Inc., Charlotte, NC 28202 (US)
(72) Inventor: EBSV, Charan, Charlotte, 28202 (US); BUNCH, Brian P., Charlotte, 28202 (US); POS, Marc M., Charlotte, 28202 (US); NARAYANAN, Sibu, Charlotte, 28202 (US)
(74) Representative: Haseltine Lake Kempner LLP

(57) **Abstract**

An example weather radar system includes one or more antennae configured to transmit a radar signal and receive a radar return signal and processing circuitry configured to detect an aircraft based on the radar return signal. The processing circuitry is further configured to, in response to detecting the aircraft, determine, based on a strength of the radar return signal, a size of the aircraft and predict, based on the size of the aircraft, a wake vortex of the aircraft including a predicted position of the predicted wake vortex.

## Description

### TECHNICAL FIELD

This disclosure relates to radar systems.

### BACKGROUND

An aircraft may use an onboard radar system to detect weather and terrain, and display information associated with weather and terrain to a flight crew. The onboard radar system may be mounted on the aircraft and may use radar beams to detect reflected radar signals from weather formations such as convective weather cells associated with turbulence, rain, lightning, and hail. Additionally, or alternatively, the onboard weather system may detect radar signals from ground terrain or other aircraft. The onboard radar system may control radar parameters and may process radar return signals to present a visual radar display.

### SUMMARY

In general, this disclosure is directed to methods, techniques, devices, and systems for predicting turbulence events based on radar data from weather radar systems. Radar systems may, in some examples, emit one or more radar signals. These radar signals may reflect and/or scatter off one or more objects and return to the radar system as radar return signals. Based on the radar return signals, the radar system may identify an airborne object, such as an aircraft, and characteristics of the airborne object, such as location, speed and direction of motion, and size. For example, a magnitude of radar return signals (e.g., reflected and/or scattered) corresponding to an airborne object having a larger size (e.g., a large passenger aircraft) may be greater than radar return signals corresponding to an airborne object having a smaller size (e.g., a medium or small passenger aircraft).

Radar return signals may depend on the transmitted radar signal from a radar system in addition to reflectance/scattering characteristics of an object generating the radar return signal. For example, a weather radar system of an aircraft may operate in a weather mode in which the transmitted radar signal comprises radar waveforms configured for detecting relatively large objects indicative of weather, e.g., clouds, precipitation, or the like. The weather radar system of the aircraft may also be configured to operate in a different mode in which the transmitted radar signal comprises different waveforms configured to detecting relatively smaller (e.g., point-like) airborne objects (e.g., other aircraft). In some examples, the weather radar system may be configured to operate in a skin paint mode for detecting point targets, at least for a portion of time, to determine the presence, location, speed and direction, and/or sizes/type of an airborne object such as another aircraft. The weather radar system may be configured to determine a wake vortex of the airborne object based on the detected size or type airborne object, location, speed, and/or direction. For example, the weather radar system may be configured to detect/determine the presence and size of an aircraft in the field of regard and determine whether there will be a wake vortex and if so, predict a position, extent, and/or magnitude of the wake vortex or wake vortex field or volume.

In some examples, the weather radar system outputs the determined wake vortex and wake vortex characteristics (e.g., location and/or position, magnitude, volume, and the like) to a weather radar display, e.g., overlaid with the positions and characteristics of detected weather and/or point targets such as other aircraft, and/or terrain. In some examples, the weather radar system may output an alert in response to determining a wake vortex.

The techniques of this disclosure may provide one or more advantages. For example, a weather radar system on board an aircraft configured to determine a wake vortex and wake vortex characteristics in addition to detecting weather provides increased detection functionality for no, or reduced, size, weight, power and/or cost penalty. In some examples, an on-board weather radar system provides improved responsivity and/or accuracy of determining a wake vortex, e.g., by virtue of being on-board the aircraft. In some examples, weather radar systems may provide reliability and/or redundancy in determining whether another aircraft is nearby and whether such other aircraft is creating turbulence or a wake vortex by virtue of not depending on the other aircraft providing such information, e.g., via traffic alert and collision avoidance (TCAS) or automatic dependent surveillance-broadcast (ADS-B). In some examples, an on-board weather radar system configured to determine a wake vortex may provide a safer flight and/or a smoother flight.

In some examples, a weather radar system includes: one or more antennae configured to transmit a radar signal and receive a radar return signal; and processing circuitry configured to: detect an aircraft based on the radar return signal; in response to detecting the aircraft, determine, based on a strength of the radar return signal, a size of the aircraft; and predict, based on the size of the aircraft, a wake vortex of the aircraft including a predicted position of the predicted wake vortex..

In some examples, a method includes: transmitting, by one or more antennae of a weather radar system, a radar signal; receiving, by the one or more antennae, a radar return signal; detecting, by processing circuitry of the weather radar system and based on the radar return signal, an aircraft; in response to detecting the aircraft, determining, by the processing circuitry and based on a strength of the radar return signal, a size of the aircraft; and predicting, by the processing circuitry and based on the size of the aircraft, a wake vortex of the aircraft including a predicted position of the predicted wake vortex.

In some examples, a non-transitory computer-readable medium includes instructions for causing one or more processors to: detect an aircraft based on a radar return signal received by a weather radar system; in response to detecting the aircraft, determine, based on a strength of the radar return signal, a size of the aircraft; predict, based on the size of the aircraft, a wake vortex of the aircraft including a predicted position of the predicted wake vortex; and output the predicted wake vortex and the predicted position of the wake vortex to a weather radar display.

The summary is intended to provide an overview of the subject matter described in this disclosure. It is not intended to provide an exclusive or exhaustive explanation of the systems, device, and methods described in detail within the accompanying drawings and description below. Further details of one or more examples of this disclosure are set forth in the accompanying drawings and in the description below. Other features, objects, and advantages will be apparent from the description and drawings, and from the claims.

### BRIEF DESCRIPTION OF DRAWINGS

FIG. 1 is a conceptual diagram illustrating an example of a vehicle equipped with a weather radar system configured to detect an aircraft and determine a wake vortex, in accordance with one or more techniques of this disclosure.
FIG. 2 is a block diagram illustrating a weather radar system, in accordance with one or more techniques of this disclosure.
FIG. 3 is a flow diagram illustrating an example operation for predicting a wake vortex using a weather radar system, in accordance with one or more techniques of this disclosure.

### DETAILED DESCRIPTION

Examples disclosed herein include methods, techniques, devices, and systems for predicting turbulence events based on radar data from weather radar systems. Radar systems may, in some examples, emit one or more radar signals. These radar signals may reflect and/or scatter off one or more objects and return to the radar system as radar return signals. Based on the radar return signals, the radar system may identify an airborne object, such as an aircraft, and characteristics of the airborne object, such as location, speed and direction of motion, and size. For example, a magnitude of radar return signals (e.g., reflected and/or scattered) corresponding to an airborne object having a larger size (e.g., a large passenger aircraft) may be greater than radar return signals corresponding to an airborne object having a smaller size (e.g., a medium or small passenger aircraft).

Radar return signals may depend on the transmitted radar signal from a radar system in addition to reflectance/scattering characteristics of an object generating the radar return signal. For example, a weather radar system of an aircraft may operate in a weather mode in which the transmitted radar signal comprises radar waveforms configured for detecting relatively large objects indicative of weather, e.g., clouds, precipitation, or the like. The weather radar system of the aircraft may also be configured to operate in a different mode in which the transmitted radar signal comprises different waveforms configured to detecting relatively smaller (e.g., point-like) airborne objects (e.g., other aircraft). In some examples, the weather radar system may be configured to operate in a skin paint mode for detecting point targets, at least for a portion of time, to determine the presence, location, speed and direction, and/or sizes/type of an airborne object such as another aircraft. The weather radar system may be configured to determine a wake vortex of the airborne object based on the detected size or type airborne object, location, speed, and/or direction. For example, the weather radar system may be configured to detect/determine the presence and size of an aircraft in the field of regard and determine whether there will be a wake vortex and if so, predict a position, extent, and/or magnitude of the wake vortex or wake vortex field or volume.

In some examples, the weather radar system outputs the determined wake vortex and wake vortex characteristics (e.g., location and/or position, magnitude, volume, and the like) to a weather radar display, e.g., overlaid with the positions and characteristics of detected weather and/or point targets such as other aircraft, and/or terrain. In some examples, the weather radar system may output an alert in response to determining a wake vortex.

The techniques of this disclosure may provide one or more advantages. For example, a weather radar system on board an aircraft configured to determine a wake vortex and wake vortex characteristics in addition to detecting weather provides increased detection functionality for no, or reduced, size, weight, power and/or cost penalty. In some examples, an on-board weather radar system provides improved responsivity and/or accuracy of determining a wake vortex, e.g., by virtue of being on-board the aircraft. In some examples, weather radar systems may provide reliability and/or redundancy in determining whether another aircraft is nearby and whether such other aircraft is creating turbulence or a wake vortex by virtue of not depending on the other aircraft providing such information (e.g., via TCAS or ADS-B). In some examples, an on-board weather radar system configured to determine a wake vortex may provide a safer flight and/or a smoother flight.

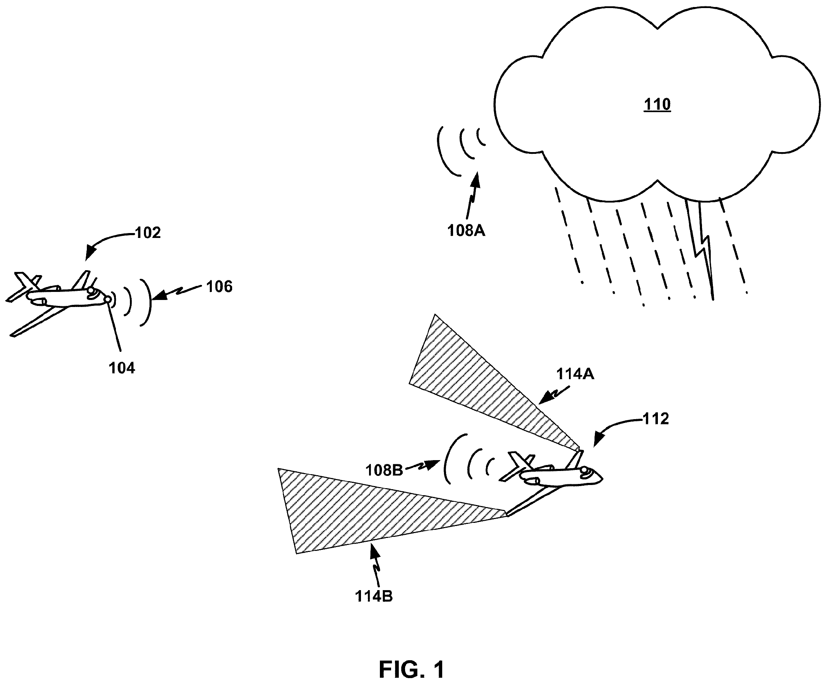

FIG. 1 is a conceptual diagram illustrating an example of a vehicle equipped with a weather radar system 104, in accordance with one or more techniques of this disclosure. The vehicle in FIG. 1 is depicted as aircraft 102; however, the techniques of this disclosure may similarly be applicable to any other air vehicle, such as a helicopter or unmanned aerial vehicle (UAV). In some examples, the techniques of this disclosure may similarly be applicable to a ground vehicle, a seagoing vessel, or an object other than a vehicle.

Aircraft 102 includes a weather radar system 104. Weather radar system 104 may be located entirely onboard aircraft 102. In some examples, weather radar system 104 includes transmission circuitry and reception circuitry. Transmission circuitry of weather radar system 104 may be configured to output transmitted radar signals 106. In some examples, transmitted radar signals 106 may comprise one or more radar signals that propagate at or near the speed of light. In some examples, transmitted radar signals 106 comprise radio waves having a frequency. Transmitted radar signals 106 may, in some examples, be at least partially reflected and/or scattered by one or more objects. The reception circuitry of weather radar system 104 may be configured to detect radar return signals 108A and/or 108B (collectively, "radar return signals 108") comprising reflected and/or scattered radar signal(s). In some examples, radar return signals 108 may correspond to transmitted radar signals 106 that reflect and/or scatter from one or more objects.

Weather radar system 104 performs and processes radar scans. Weather radar system 104 may include processing circuitry configured to identify, based on radar return signals 108, one or more obstacles, weather, or other objects surrounding aircraft 102. For example, the processing circuitry of weather radar system 104 may determine a distance between weather radar system 104 and an object by measuring a time between transmission of radar signals and reception of radar signals reflected off the object. Processing circuitry of weather radar system 104 may additionally or alternatively use the Doppler effect to determine the velocity of an object by measuring a difference in frequency between transmitted radar signals and radar return signals corresponding to the object. In some examples, weather radar system 104 may output, to a user interface, information corresponding to one or more identified objects for display to a user, such as a pilot of aircraft 102.

In some examples, weather radar system 104 may be configured to detect, based on transmitted radar signals 106 and radar return signals 108A, an instance of inclement weather (e.g., weather 110). Inclement weather may generally include any hazardous atmospheric disturbance, such as a storm cell, storm clouds, hail, rain, tornadoes, hurricanes, and blizzards. Weather radar system 104 may identify one or more areas of potential headwinds and/or turbulence based on radar data corresponding to weather 110. Weather radar system 104 may be configured to determine a distance between aircraft 102 and weather 110, a size of weather 110, and one or more other characteristics of weather 110 by analyzing transmitted radar signals 106 and radar return signals 108A. In some examples, weather radar system 104 may be configured detect an identity of weather 110 based on transmitted radar signals 106 and radar return signals 108A. For example, weather radar system 104 may be configured to determine that weather 110 is weather as opposed to another object such as an aircraft or terrain.

Weather radar system 104 may be configured to detect, based on transmitted radar signals 106 and radar return signals 108B, aircraft 112. In some examples, weather radar system 104 may be configured to determine a distance between aircraft 102 and aircraft 112, a velocity or speed of aircraft 112, a direction in which aircraft 112 is traveling, and one or more other characteristics of aircraft 112 based on transmitted radar signals 106 and radar return signals 108B. In some examples, weather radar system 104 may be configured detect an identity of aircraft 112 based on transmitted radar signals 106 and radar return signals 108B. For example, weather radar system 104 may be configured to determine that aircraft 112 is an aircraft as opposed to another object such as weather or terrain. In some examples, weather radar system 104 may be configured to determine an aircraft type of aircraft 112, e.g., a size of aircraft 112.

Weather radar system 104 may be configured to predict, based on identity, type, size, position, speed, and/or direction of aircraft 112 radar signals, a wake vortex 114A and/or 114B (collectively, "wake vortices 114") of aircraft 112. In some examples, weather radar system 104 may predict the presence of wake vortices 114 and a position of wake vortices 114, e.g., at a point in time and/or as a function of time. In some examples, weather radar system 104 may be configured to update the predicted presence, positions, volumes, and/or magnitudes of wake vortices 114. For example, weather radar system 104 may be configured to track aircraft 112, and based on the tracking, e.g., tracking the identity, type, size, position, speed, and/or direction of aircraft 112 as a function of time based on radar return signals 108B as a function of time, and based on the tracking, predict a plurality of positions of wake vortices 114 at a plurality of times, a plurality of volumes of wake vortices 114 at a plurality of times, a plurality of magnitudes as a function of position (e.g., within wake vortices 114 volumes) of wake vortices 114 at a plurality of times, e.g., a plurality of turbulence magnitudes including wind speeds, rotations, directions, or the like, as a function of position and/or time.

In some examples, weather radar system 104 may be configured to detect terrain, based on transmitted radar signals 106 and other radar return signals (e.g., radar return signals other than radar return signals 108). In some examples, weather radar system 104 may be configured to determine an absolute distance between aircraft 102 and terrain, a difference in altitude between aircraft 102 and a highest altitude of terrain, and one or more other characteristics of terrain based on transmitted radar signals 106 and other radar return signals. In some examples, weather radar system 104 may be configured detect an identity of terrain based on transmitted radar signals 106 and other radar return signals. For example, weather radar system 104 may be configured to determine that terrain is terrain as opposed to another object such as weather or an aircraft.

In some examples, weather radar system 104 may be configured to store radar return signals 108 and/or other radar return signals in memory. In some examples, weather radar system 104 may be configured to store radar return signals 108 and/or other radar return signals in memory as radar data, such as three-dimensional (3D) radar data. In some examples, 3D radar data may include radar data corresponding to weather 110, aircraft 112, terrain, and one or more other objects. Radar data may include data for one or more points (e.g., positions) within a volume. Weather radar system 104 may update the radar data stored in the memory based on the most recent data arriving at aircraft 102 and/or weather radar system 104, so that the radar data reflects the current state of a 3D environment and/or volume of space surrounding and/or proximate to aircraft 102. Weather radar system 104 may, in some examples, output at least some of the radar data for display on a user interface (e.g., a touchscreen) so that users can view the data. In some examples, the user interface may receive one or more inputs based on the information displayed on the user interface.

In some examples, a user interface (e.g., a touchscreen) of weather radar system 104 is configured to display a two-dimensional (2D) overhead profile of the 3D environment surrounding and/or proximate to aircraft 102. The weather radar system 104 may display the 2D overhead profile based on the radar data stored in the memory. In some examples, the 2D overhead profile of the 3D environment may indicate information corresponding to weather 110, aircraft 112, terrain, or any combination thereof. For example, the 2D overhead profile may indicate a position of the aircraft 102 a position of the weather 110, a position of aircraft 112, a position or positions of wake vortices 114, and a position of terrain from a perspective above aircraft 102 looking at the ground.

The user interface of weather radar system 104 may also be configured to display a cross-section of the radar data at a certain altitude requested by the user. For example, weather 110, wake vortices 114, and terrain may differ based on the altitude, and the user may want to view weather 110, wake vortices 114, and/or terrain at a certain altitude. Since the radar data stored in the memory is three-dimensional, the weather radar system 104 may display a "slice" of the radar data (e.g., 3D radar data) corresponding to an altitude. The user interface of weather radar system 104 may display information corresponding to weather 110, aircraft 112, wake vortices 114, and/or terrain at an altitude requested by the user and/or display a top-down view of the 3D environment surrounding aircraft 102 from a perspective above aircraft 102. In some examples, weather radar system 104 may receive, via the touchscreen, a user selection of a region of the 3D environment near the aircraft. Weather radar system 104 may determine, based on radar data, additional information corresponding to the selected region of the 3D environment. For example, the additional information may include a maximum altitude of terrain, a maximum altitude of weather 110, a velocity of aircraft 112, positions, magnitudes, and volumes of wake vortices 114, or any combination thereof.

Weather radar can use supplemental information from other sources such as ADS-B or TCAS. ADS-B data is used in aviation to track aircraft as they travel through airspace. ADS-B is an important tool for managing air traffic to facilitate air travel and maintaining aviation safety. ADS-B data corresponding to an aircraft may include any one or combination of identity data indicating a unique identifier for the aircraft, position data indicating a precise location of the aircraft, velocity data indicating a speed and a direction of the aircraft, altitude data indicating a current altitude of the aircraft above sea level, and flight information indicating details corresponding to a flight associated with the aircraft. This means that ADS-B data may include information that overlaps with information indicated by radar data. For example, radar data collected by weather radar system 104 may indicate any one or combination of a location, velocity, and altitude of another aircraft 112 near aircraft 102. ADS-B data may be used to confirm and/or improve the accuracy of the radar data collected by weather radar system 104, e.g., to confirm or correct a radar-detected size of aircraft 112.

Aircraft may additionally or alternatively use TCAS data to reduce risk of mid-air collisions between aircraft. TCAS data may include information from transponder signals. For example, TCAS data may include proximity information that indicate an altitude, position, and velocity of one or more aircraft proximate to an aircraft. This means that TCAS data may include information that overlaps with information indicated by radar data. For example, radar data collected by weather radar system 104 may indicate any one or combination of a location, velocity, and altitude of another aircraft near aircraft 102. TCAS data may be used to confirm and/or improve the accuracy of the radar data collected by weather radar system 104, e.g., to confirm or correct a radar-detected size of aircraft 112.

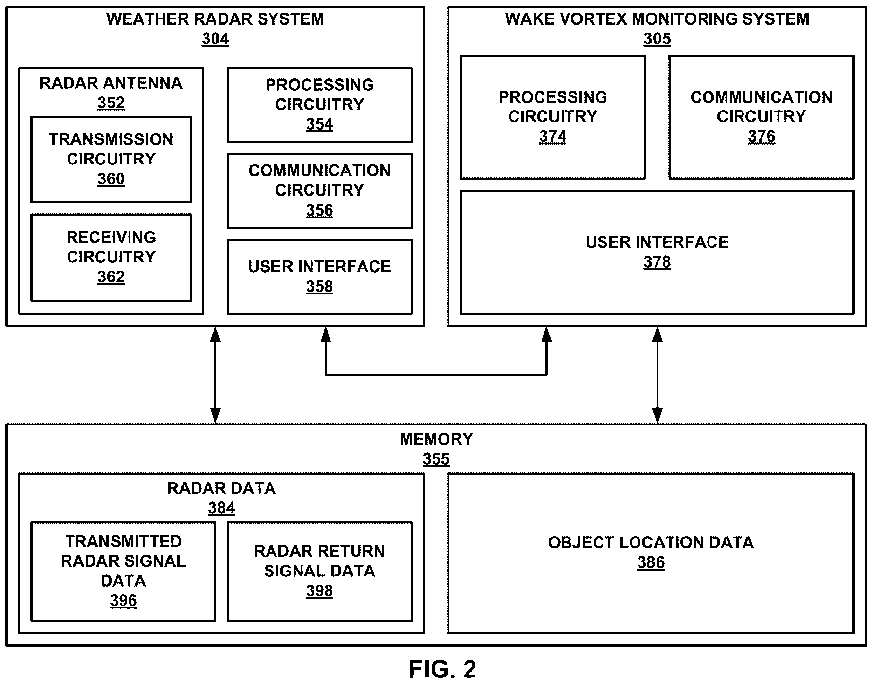

In some examples, aircraft may not be equipped with ADS-B and/or TCAS. Weather radar may provide wake vortex information, e.g., to the crew via an existing radar display. For example, weather radar system 104 may be configured to display wake vortex information, e.g., the presence and/or one or more characteristics (e.g., volume, position, magnitude) of wake vortices 114, predictions regarding wake vortices 114 via user interface 358 (FIG. 2).

Aircraft 102 may be configured to communicate with one or more ground systems, e.g., via a communication link. In some examples, the ground systems may be configured to transmit object location data to aircraft 102. The object location data may indicate a location of one or more objects within a field of view of weather radar system 104. For example, the object location data may include ADS-B data and/or TCAS data indicating a location, altitude, velocity, and/or direction of aircraft 112. Aircraft 102 may be configured to transmit information to the ground systems. Information may include radar data, ADS-B data, TCAS data, other kinds of data, or any combination thereof. Aircraft 102 is not limited to communicating with ground systems. In some examples, aircraft 102 may communicate with one or more other kinds of systems or objects such as satellite systems, sea-based systems, other aircraft (e.g., aircraft 112), or any combination thereof. For example, weather radar system 104 may communicate radar data with a system, the system may process the data and determine the presence and/or one or more characteristics (e.g., volume, position, magnitude) of wake vortices 114, and the system may communicate the presence and/or one or more characteristics of wake vortices 114 to weather radar system 104.

FIG. 2 is a block diagram illustrating a weather radar system 304 and a wake vortex monitoring system 305, in accordance with one or more techniques of this disclosure. Weather radar system 304 includes radar antenna 352, processing circuitry 354, communication circuitry 356, and user interface 358. Radar antenna 352 includes transmission circuitry 360 and receiving circuitry 262. Wake vortex monitoring system 305 may include processing circuitry 374, communication circuitry 376, user interface 378, and receiving circuitry 380. Weather radar system 304 and wake vortex monitoring system 305 may communicate with memory 355. Memory 355 may be configured to store radar data 384 and object location data 386. Radar data 384 may include transmitted radar signals 306 and radar return signals 308. For ease of explanation, FIG. 2 shows weather radar system 304, wake vortex monitoring system 305, memory 355, and the various components thereof, as being distinct units. In some implementations, however, the functionality of many of these units may be performed by common or highly integrated components.

Weather radar system 304 may be an example of weather radar system 104 of FIG. 1. Wake vortex monitoring system 305 may be included as a part of weather radar system 104 of FIG. 1, or wake vortex monitoring system 305 may be included as a part of weather radar system 304, or wake vortex monitoring system 305 may be a standalone system, e.g., as shown in FIG. 2. Transmitted radar signal data 396 may comprise data corresponding to transmitted radar signals 106 of FIG. 1. Radar return signals 308 may comprise data corresponding radar return signals 108 of FIG. 1.

Radar antenna 352 may be installed near the front of a vehicle, such as within the nose of aircraft 102 of FIG. 1, and includes transmission circuitry 360 configured to transmit a transmitted radar signals 106 of FIG. 1. For example, transmission circuitry 160 may pass an electric current through a magnetron or some other device, causing emission of electromagnetic waves of a given wavelength via radar antenna 352. In some examples, radar antenna 352 may include separate antennas for transmission circuitry 360 and receiving circuitry 362. In some examples, radar antenna 352 may include the same antenna for transmission circuitry 360 and receiving circuitry 362.

Radar antenna 352 includes receiving circuitry 362 configured to receive a radar return signals 108 of FIG. 1. For example, receiving circuitry 362 may include a substance that, when struck by electromagnetic waves of radar return signals 108, generates a characteristic electric current indicative of the radar return signals 108, which may then be interpreted as data by processing circuitry 354.

Processing circuitry 354 may include fixed function circuitry and/or programmable processing circuitry. Processing circuitry 354 may include any one or more of a microprocessor, a controller, a digital signal processor (DSP), graphics processing unit (GPU), tensor processing unit (TPU), an application specific integrated circuit (ASIC), a field-programmable gate array (FPGA), or equivalent discrete or analog logic circuitry. In some examples, processing circuitry 354 may include multiple components, such as any combination of one or more microprocessors, one or more controllers, one or more DSPs, GPUs, TPUs, one or more ASICs, or one or more FPGAs, as well as other discrete or integrated logic circuitry, which may be physically located in one or more devices in one or more physical locations.

Processing circuitry 354 may be capable of processing instructions stored in memory 355. In some examples, memory 355 includes a computer-readable medium that includes instructions that, when executed by processing circuitry 354, cause weather radar system 304 to perform various functions attributed to them herein. Memory 355 may include any volatile, non-volatile, magnetic, optical, or electrical media, such as a random-access memory (RAM), read-only memory (ROM), non-volatile RAM (NVRAM), electrically erasable programmable ROM (EEPROM), ferroelectric RAM (FRAM), dynamic random-access memory (DRAM), flash memory, or any other digital media.

Processing circuitry 354 may receive a signal (e.g., data) indicative of radar return signals 108, and process the signal so as to determine one or more objects (e.g., weather 110 and/or aircraft 112 of FIG. 1 and/or terrain) in the vicinity that would have caused the transmitted radar signals 106 to be reflected. For example, processing circuitry 354 may determine, based on radar return signals 108A, the presence of weather 110. Processing circuitry 354 may determine, based on radar return signals 108B, a presence of aircraft 112.

Processing circuitry 354 may, in some examples, be configured to determine a set of radar data based on transmitted radar signals 106 and radar return signals 108. In some examples, the set of radar data may include one or more differences between a transmission time of a transmitted radar signal of transmitted radar signals 106 and a reception time of a radar return signal of radar return signals 108 corresponding to the transmitted radar signal. The radar data may include one or more differences between a magnitude of a transmitted radar signal of transmitted radar signals 106 and a magnitude of a radar return signal of radar return signals 108 corresponding to the transmitted radar signal. The radar data may include one or more differences between a frequency of a transmitted radar signal of transmitted radar signals 106 corresponding to the object and a frequency of a radar return signal of radar return signals 108 corresponding to the object. The set of radar data may include standalone frequencies, magnitudes, and other parameters of one or more radar signals of transmitted radar signals 106 and radar return signals 108. In some examples, processing circuitry 354 may store the set of radar data in memory 355 as part of radar data 384. In some examples, the set of radar data includes transmitted radar signal data 396, radar return signal data 398, other data, or any combination thereof.

In some examples, weather radar system 104 includes communication circuitry 356 in order to communicate with wake vortex monitoring system 305 and/or memory 355. Communication circuitry 356 may include any suitable hardware, firmware, software or any combination thereof for wirelessly communicating with another device. Communication circuitry 356 may include any suitable hardware, firmware, software or any combination thereof for communication via wired communication links. Communication circuitry 356 may be configured to transmit and/or receive signals via inductive coupling, electromagnetic coupling, Near Field Communication (NFC), Radio Frequency (RF) communication, Bluetooth^{®}, Wi-Fi, or other proprietary or non-proprietary wireless communication schemes.

User interface 358 includes a display (not shown), such as a liquid crystal display (LCD), a light-emitting diode (LED) display, or another type of screen, with which processing circuitry 354 may present information related to weather radar system 304 (e.g., information relating to weather 110, aircraft 112, and/or terrain). In addition, user interface 358 may include an input mechanism to receive input from the user. The input mechanisms may include, for example, any one or more of buttons, a keypad (e.g., an alphanumeric keypad), a peripheral pointing device, a touch screen, or another input mechanism that allows the user to navigate through user interfaces presented by processing circuitry 354 and provide input. In other examples, user interface 358 also includes audio circuitry for providing audible notifications, instructions or other sounds to the user, receiving voice commands from the user, or both. Memory 355 may include instructions for operating user interface 358.

User interface 358 may be configured to display a graphical indication of one or more objects in the vicinity of aircraft 102 (e.g., weather 110, aircraft 112, and/or terrain). For example, a display screen of user interface 358 may output a graphical indication of one or more of weather 110, aircraft 112, and terrain obstacles detected by weather radar system 304 based on radar return signals 108. In some examples, user interfaces 358, 378 may be the same interface, and in some examples, user interfaces 358, 378 may be different interfaces. In some examples, user interface 358 may include data and/or representations corresponding to weather 110, objects such as aircraft 112, and/ or wake vortices 114.

Wake vortex monitoring system 305 may be configured to determine a presence and position of wake vortices 114. In some examples, wake vortex monitoring system 305 may be configured to determine volumes and magnitudes of wake vortices 114. For example, wake vortex monitoring system 305 may be configured to determine a turbulence magnitude, e.g., wind speed, direction, and/or rotation, as a function of position within a volume determined to include a wake vortex 114A and/or 114B, and in some examples, to determine the evolution of wake vortices 114 over time, e.g., based on data extracted from radar return signal 108B while tracking aircraft 112. For example, wake vortex monitoring system 305 maa be configured to track aircraft 112, receive a second radar return signal 108B, e.g., at second time, and update the presence, and/or characteristics, of wake vortices 114, e.g., a wind speed, direction, and/or rotation of a volume corresponding to wake vortices 114, or one or more values corresponding to a vortex magnitude of wake vortices 114 as a function of position, e.g., within a volume corresponding to wake vortices 114.

Wake vortex monitoring system 305 may include processing circuitry 374. Processing circuitry 374 may include fixed function circuitry and/or programmable processing circuitry. Processing circuitry 374 may include any one or more of a microprocessor, a controller, a DSP, a GPU, a TPU, an ASIC, an FPGA, or equivalent discrete or analog logic circuitry. In some examples, processing circuitry 374 may include multiple components, such as any combination of one or more microprocessors, one or more controllers, one or more DSPs, GPUs, TPUs, one or more ASICs, or one or more FPGAs, as well as other discrete or integrated logic circuitry, which may be physically located in one or more devices in one or more physical locations. Processing circuitry 374 may be capable of processing instructions stored in memory 355. In some examples, processing circuitry 354 and processing circuitry 374 may represent the same processing circuitry. In some examples, processing circuitry 354 may be separate from processing circuitry 374.

In some examples, wake vortex monitoring system 305 includes communication circuitry 376 in order to communicate with weather radar system 304 and/or memory 355. Communication circuitry 376 may include any suitable hardware, firmware, software or any combination thereof for wirelessly communicating with another device. Communication circuitry 376 may include any suitable hardware, firmware, software or any combination thereof for communication via wired communication links. Communication circuitry 376 may be configured to transmit and/or receive signals via inductive coupling, electromagnetic coupling, NFC, RF communication, Bluetooth^{®}, Wi-Fi, or other proprietary or non-proprietary wired or wireless communication schemes. In some examples, communication circuitry 356 and communication circuitry 376 may represent the same processing circuitry. In some examples, communication circuitry 376 may be separate from communication circuitry 376.

User interface 378 includes a display (not shown), such as an LCD, an LED display, or another type of screen, with which processing circuitry 374 may present information related to wake vortex monitoring system 305 (e.g., information related to a wake vortex). In addition, user interface 378 may include an input mechanism to receive input from the user. The input mechanisms may include, for example, any one or more of buttons, a keypad (e.g., an alphanumeric keypad), a peripheral pointing device, a touch screen, or another input mechanism that allows the user to navigate through user interfaces presented by processing circuitry 375 and provide input. In other examples, user interface 378 also includes audio circuitry for providing audible notifications, instructions or other sounds to the user, receiving voice commands from the user, or both. Memory 355 may include instructions for operating user interface 378. In some examples, user interface 358 and user interface 378 may represent the same user interface. In some examples, user interface 358 may be separate from user interface 378.

Radar data 384 stored in memory 355 may include transmitted radar signal data 396 and radar return signal data 398. In some examples, transmission circuitry 360 may emit one or more transmitted radar signals and save transmitted radar signal data 396 corresponding to the one or more transmitted radar signals. In some examples, receiving circuitry 362 may receive one or more radar return signals (e.g., reflected and/or scattered radar signals) and save radar return signal data 398 corresponding to the one or more reflected radar signals. In some examples, radar return signal data 398 may include radar return signal data corresponding to each object of one or more objects within a field of view of weather radar system 304. That is, the radar return signal data corresponding to each object of the one or more objects may correspond to one or more radar return signals that reflected off and/or scattered from the corresponding object.

Transmitted radar signal data 396 may include one or more parameters of transmitted radar signals output by transmission circuitry 360. In some examples, the one or more parameters of transmitted radar signals included in transmitted radar signal data 396 may include a magnitude of transmitted radar signals as a function of time, a frequency of transmitted radar signals as a function of time, a direction of transmitted radar signals as a function of time, or any combination thereof.

In some examples, weather radar system 304 may operate in a mode configured for determining a wake vortex. For example, weather radar system 304 may be configured to operate in a skin paint mode for detecting point targets, e.g., rather than detecting larger targets, such as weather 110. In some examples, one or more parameters of transmitted radar signals may correspond to the skin paint mode. In some examples, processing circuitry 354 may cause transmission circuitry 360 to output, via radar antenna 352, transmitted radar signals 106 comprising vortex detection radar signals and/or radar waveforms configured to detect relatively smaller targets, e.g., according to skin paint mode parameters from transmitted radar signal data 396, rather than weather detection radar signals and or radar waveforms. For example, weather radar system 304 may be configured to output a transmitted radar signals 106 comprising a vortex detection radar signal comprising a high range resolution waveform, e.g., implemented using direct short pulse, pulse compression and/or stepped frequency waveforms. In other examples, weather radar system 304 may be configured to output a transmitted radar signals 106 comprising a vortex detection radar signal comprising a predictive windshear system (PWS) waveform.

In some examples, weather radar system 304 may be configured to output transmitted radar signals 106 in a forward direction, e.g., a forward direction of aircraft 102. In some examples, weather radar system 304 (e.g., via antenna 352) may be configured to output transmitted radar signals 106 with at least a 160-degree field of regard relative to the forward direction of aircraft 102, e.g., into a cone of angles having at least a 160-degree angle.

Radar return signal data 398 may include one or more parameters of radar return signals received by receiving circuitry 362. In some examples, the one or more parameters of radar return signals included in radar return signal data 398 may include a magnitude of radar return signals as a function of time, a frequency of radar return signals as a function of time, a direction of radar return signals as a function of time, or any combination thereof.

In some examples, processing circuitry 354 of weather radar system 304 may be configured to determine characteristics of one or more objects based on transmitted radar signal data 396 and radar return signal data 398. For example, processing circuitry 354 may be configured to determine one or more characteristics of an object based on a difference between a magnitude of transmitted radar signals corresponding to an object and a magnitude of radar return signals corresponding to the object, a difference between a frequency of transmitted radar signals corresponding to an object and a frequency of radar return signals corresponding to the object, a difference between a transmission time of transmitted radar signals corresponding to an object and a reception time of radar return signals corresponding to the object, or any combination thereof.

Object location data 386 may include object location data corresponding to each object of one or more objects. In some examples, object location data 386 may include object location data corresponding to each object of a set of objects. For example, object location data 386 may include ADS-B data indicating a location, an altitude, a speed, and a direction of each aircraft of a set of aircrafts. Additionally, or alternatively, object location data 386 may include TCAS data indicating a location, an altitude, a speed, and a direction of each aircraft of a set of aircrafts.

In some examples, processing circuitry 374 of wake vortex monitoring system 305 is configured to identify, in object location data 386, data indicative of a location of an object relative to weather radar system 304. In some examples, the object includes an aircraft (e.g., aircraft 112 of FIG. 1). The object location data of object location data 386 corresponding to aircraft 112, for example, may include a location of aircraft 112 corresponding to a ground coordinate, information corresponding to an altitude of aircraft 112, information corresponding to a speed of aircraft 112, information corresponding to a direction of aircraft 112, information corresponding to a size of aircraft 112, information corresponding to a type of aircraft 112, or any combination thereof.

In some examples, processing circuitry 374 of wake vortex monitoring system 305 is configured to identify, in radar data 384, radar data corresponding to an object relative to weather radar system 304. In some examples, the object includes an aircraft (e.g., aircraft 112 of FIG. 1). The radar data of radar data 384 corresponding to aircraft 112 may include transmitted radar signal data of transmitted radar signal data 396 corresponding to aircraft 112, radar return signal data of radar return signal data 398 corresponding to aircraft 112, or any combination thereof. For example, radar return signal data 398 may include data corresponding to one or more radar signals reflected and/or scattered off aircraft 112 that correspond to one or more transmitted radar signals. Data indicative of the one or more transmitted radar signals may be stored as part of transmitted radar signal data 396.

Processing circuitry 374 of wake vortex monitoring system 305 may determine, based on the location, speed, direction (e.g., relative to the weather radar system 304), size, and/or type of an object as indicated by object location data 386,

In some examples, processing circuitry 374 of wake vortex monitoring system 305 may determine a 3D location of an object based on object location data of object location data 386 corresponding to the object. For example, when the object is aircraft 112 and the object location data includes ADS-B and/or TCAS data corresponding to aircraft 112, processing circuitry 374 may determine a 3D location of aircraft 112 based on position data and altitude data of aircraft 112 indicated by the ADS-B and/or TCAS data corresponding to aircraft 112. For example, based on position data indicating a position of aircraft 112 corresponding to a 2D ground coordinate and based on altitude data indicating an altitude of aircraft 112, processing circuitry 374 may determine a 3D position of aircraft 112.

Processing circuitry 374 may additionally or alternatively determine a 3D position of aircraft 102. Aircraft 102 may include sensors that track a position, altitude, speed, and direction of aircraft 102. Based on data collected indicating the position, altitude, speed, and direction of aircraft 102, processing circuitry 374 may determine a 3D position of aircraft 102. Based on the determined 3D position of aircraft 102 and the 3D position of aircraft 112 determined based on the set of object location data of object location data 386 corresponding to 112, processing circuitry 374 of wake vortex monitoring system 305 may determine the 3D position of aircraft 112 relative to the 3D position of aircraft 102. The 3D position of aircraft 112 relative to the 3D position of aircraft 102 may indicate an absolute distance between aircraft 112 and aircraft 102, an altitude difference between aircraft 112 and aircraft 102, a position of aircraft 112 relative to a sensor axis of weather radar system 304, or any combination thereof. For example, processing circuitry 374 may determine one or more angles between a line between aircraft 112 and aircraft 102 and a sensor axis of weather radar system 304.

In some examples, weather radar system 304 is oriented along a sensor axis. The sensor axis of weather radar system 304 may, in some examples, extend along a direction in which transmission circuitry 360 outputs one or more transmitted radar signals. In some examples, transmitted radar signals 106 may propagate outwards from transmission circuitry 360 along the sensor axis in a "cone" formation, e.g., having at least a 160-degree apex angle, where the sensor axis extends through a center of the cone. Transmitted radar signals 106 may reflect and/or scatter off one or more objects within the cone and return to receiving circuitry 362 as radar return signals 108. Based on where an object is located within the cone (e.g., in the center of the cone near the sensor axis, at an edge of the cone displaced from the sensor axis), radar return signals corresponding to the object may have different parameters.

In some examples, weather radar system 304 may be located on or within aircraft 102 of FIG. 1 and may be configured to predict the presence and/or location of wake vortices 114, based on radar return signal 108B, while aircraft 102 (and aircraft 112) are in a flight phase. For example, weather radar system 304 may be configured to change from a weather detection mode and outputting a weather detection transmitted radar signal 106 (comprising a weather detection radar waveform) to a vortex detection mode and outputting a transmitted radar signal 106 (comprising a vortex detection radar waveform). In some examples, weather radar system 304 may be configured to change from a weather detection mode to a vortex detection mode while aircraft 102 has an altitude of less than or equal to 2,000 feet, e.g., during a takeoff and/or landing flight phase of aircraft 102 including weather radar system 304.

In some examples, in addition to determining aircraft 112 and characteristics of aircraft 112 (e.g., size, position, speed, direction, range from aircraft 102), weather radar system 304 may be configured to update predicted wake vortices 114, e.g., update the presence and/or characteristics of wake vortices 114. For example, weather radar system 304 may be configured to receive a wind signal indicative of wind speed and direction proximate aircraft 112 and update, based on the wind signal, the predicted position of the predicted wake vortices 114. Weather radar system 304 may be configured to receive the wind signal from another system, e.g., a ground-based system, a satellite system, a sea-based systems, from aircraft 112, or based on data determined from radar return signal 108B. For example, weather radar system 304 may be configured to determine the wind signal based on reflected and/or scattered transmitted radar signals 106 comprising weather detection waveforms and/or vortex detection waveforms.

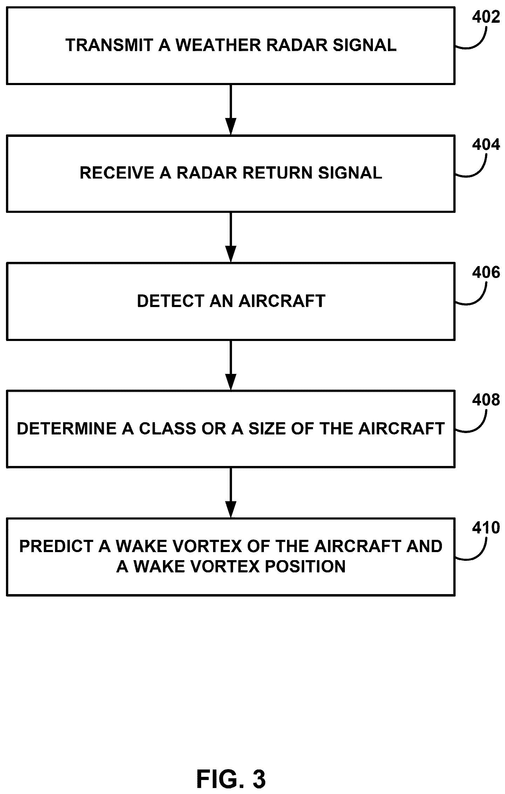

FIG. 3 is a flow diagram illustrating an example operation for predicting a wake vortex using a weather radar system, in accordance with one or more techniques of this disclosure. The example operation is described with respect to weather radar system 104 of FIG. 1, and weather radar system 304 and wake vortex monitoring system 305 of FIG. 2, and components thereof. However, the techniques of FIG. 3 may be performed by different components of weather radar system 104, weather radar system 304, and wake vortex monitoring system 305, or by additional or alternative systems.

Weather radar system 104 of aircraft 102 may output transmitted radar signals 106 (402). For example, an antenna and/or antennae, e.g., antenna 352, may output transmitted radar signals 106. In some examples, weather radar system 104 may change from a weather detection mode to a vortex detection mode and/or a skin paint mode. For example, processing circuitry 354 may cause transmission circuitry 360 to change from outputting a weather detection radar signal and/or waveform to outputting a vortex detection and/or aircraft detection (or point or small target detection) radar signal and/or waveform, e.g., a PWS waveform, a high range resolution waveform, a direct short pulse waveform, a pulse compression waveform and/or a stepped frequency waveform. In some examples, processing circuitry 354 may cause transmission circuitry 360 to change from outputting a weather detection radar signal and/or waveform to outputting a vortex detection radar signal and/or waveform while aircraft 102 has an altitude of less than or equal to 2,000 feet, e.g., during a takeoff or landing flight phase of aircraft 102. In some examples, processing circuitry 354 may cause transmission circuitry 360 to output a vortex detection radar signal and/or waveform comprising at least one of a PWS waveform, a high range resolution waveform, a direct short pulse waveform, a pulse compression waveform and/or a stepped frequency waveform. In other examples, processing circuitry 354 may cause transmission circuitry 360 to change from outputting a weather detection radar signal and/or waveform to outputting a vortex detection radar signal and/or waveform while aircraft 102 has an altitude of greater than 2,000 feet, e.g., during a different flight phase of aircraft 102, or while aircraft 102 is on the ground, e.g., while parked and/or taxiing.

Weather radar system 104 of aircraft 102 may receive radar return signals 108 (404). For example, an antenna and/or antennae, e.g., antenna 352, may receive radar return signals 108, e.g., which may be reflections from metallic objects such as an aircraft. Receiving circuitry 362 may output a signal indicative of, and/or proportional to, radar return signals 108, to processing circuitry 354. Processing circuitry 354 may detect aircraft 112 based on the received radar return signals 108 (406). In response to detecting aircraft 112, processing circuitry 354 may estimate a size, position, speed, direction, altitude, or type of aircraft 112 (408). For example, processing circuitry 354 may determine aircraft 112 to be a fixed-wing aircraft, a group I aircraft, a group II aircraft, a group III aircraft, a group IV aircraft, a group V aircraft, or a group VI aircraft.

Processing circuitry 354 may predict a wake vortex 114A (and/or 114B) of aircraft 112 including a predicted position of the predicted wake vortex 114A or vortices 114 (410). In some examples, weather radar system 304 may be located on or in aircraft 102, and processing circuitry 354 may predict wake vortices 114 while aircraft 102 is in a flight phase, e.g., takeoff, landing, climbing, descending, and/or cruising. In some examples, processing circuitry 354 may determine, based on data extracted from radar return signals 108, a range and a speed of aircraft 112, and may predict wake vortices 114 and positions of wake vortices 114 based on the range and/or speed of aircraft 112.

In some examples, weather radar system 104 may output the determined wake vortex and wake vortex characteristics (e.g., location and/or position, magnitude, volume, and the like) to a weather radar display, e.g., overlaid with the positions and characteristics of detected weather 110 and/or point targets such as aircraft 112, and/or terrain. In some examples, weather radar system 104 may output an alert in response to determining a wake vortex, e.g., a visual alert, a warning, an audible alert, a blinking or flashing light or warning, or the like.

In some examples, weather radar system 104 may track aircraft 112. For example, processing circuitry 354 may cause transmission circuitry 360 to cause radar antenna 352 to output a second transmitted radar signals 106 and a subsequent time from the first transmitted radar signals 106, and processing circuitry 354 may receive (e.g., from radar antenna 352 and receiving circuitry 362) a second radar return signals 108 at a subsequent time from the first radar return signals 108. Processing circuitry 354 may update, based on the second radar return signals 108, the predicted position, magnitude, volume, and/or any other suitable characteristic, of wake vortices 114.

In some examples, processing circuitry 354may receive a wind signal indicative of wind speed and direction proximate aircraft 112, and may update the predicted position, magnitude, volume, and/or any other suitable characteristic, of wake vortices 114, based on the received wind signal. For example, weather radar system 104 may detect a wind speed and direction proximate to aircraft 112 while in vortex detection mode, e.g., outputting transmitted radar signals 106 comprising a vortex detection waveform, or weather radar system 104 may detect a wind speed and direction proximate to aircraft 112 while in weather detection mode, e.g., outputting transmitted radar signals 106 comprising a weather detection waveform. In some examples, weather radar system 104 may alternate between weather detection mode and vortex detection mode, e.g., alternatingly outputting transmitted radar signals 106 comprising a weather detection waveform and receiving radar return signals 108 for a first amount of time and outputting transmitted radar signals 106 comprising a vortex detection waveform and receiving radar return signals 108 for a first amount of time.

The following numbered examples may demonstrate one or more aspects of the disclosure.

Example 1: A weather radar system includes: one or more antennae configured to transmit a radar signal and receive a radar return signal; and processing circuitry configured to: detect an aircraft based on the radar return signal; in response to detecting the aircraft, determine, based on a strength of the radar return signal, a size of the aircraft; and predict, based on the size of the aircraft, a wake vortex of the aircraft including a predicted position of the predicted wake vortex.

Example 2: The weather radar system of example 1, wherein the radar return signal is a first radar return signal, wherein the processing circuitry is further configured to: track, via the weather radar system, the aircraft; receive a second radar return signal; and update, based on second radar return signal, the predicted position of the predicted wake vortex.

Example 3: The weather radar system of example 1 or example 2, wherein the aircraft is a first aircraft, wherein the weather radar system is located on a second aircraft.

Example 4: The weather radar system of example 3, wherein predicting the wake vortex of the first aircraft occurs while the second aircraft is in a flight phase.

Example 5: The weather radar system of example 4, wherein the one or more antennae is configured to transmit the radar signal and receive the radar return signal with at least a 160-degree field of regard relative to a forward direction of the second aircraft.

Example 6: The weather radar system of any one of examples 1-5, wherein the processing circuitry is further configured to: determine, based on the radar return signal, a range and a speed of the aircraft, wherein predicting the wake vortex of the aircraft and the predicted position of the predicted wake vortex is further based on the range and the speed of the aircraft.

Example 7: The weather radar system of any one of examples 1-6, wherein the processing circuitry is further configured to: receive a wind signal indicative of wind speed and direction proximate the aircraft; and update, based on the wind signal, the predicted position of the predicted wake vortex.

Example 8: The weather radar system of any one of examples 1-7, wherein the radar signal comprises a weather detection radar signal, wherein the one or more antennae is configured to transmit a vortex detection radar signal, wherein the processing circuitry is further configured to cause the one or more antennae to change from transmitting the weather detection radar signal to transmitting a vortex detection radar signal, wherein the radar return signal comprises a reflected or a scattered vortex detection radar signal.

Example 9: The weather radar system of example 8, wherein the vortex detection radar signal comprises at least one of a predictive windshear system (PWS) waveform, a high range resolution waveform, a direct short pulse waveform, a pulse compression waveform or a stepped frequency waveform.

Example 10: The weather radar system of example 8 or example 9, wherein the aircraft is a first aircraft, wherein the weather radar and processing circuitry are located on a second aircraft, wherein the processing circuitry is configured to cause the one or more antennae to change from transmitting the weather detection radar signal to transmitting the vortex detection radar signal while the second aircraft has an altitude of less than or equal to 2,000 feet.

Example 11: The weather radar system of any one of examples 1-10, wherein the processing circuitry is further configured to output the predicted wake vortex and the predicted position of the wake vortex to a weather radar display.

Example 12: A method including: transmitting, by one or more antennae of a weather radar system, a radar signal; receiving, by the one or more antennae, a radar return signal; detecting, by processing circuitry of the weather radar system and based on the radar return signal, an aircraft; in response to detecting the aircraft, determining, by the processing circuitry and based on a strength of the radar return signal, a size of the aircraft; and predicting, by the processing circuitry and based on the size of the aircraft, a wake vortex of the aircraft including a predicted position of the predicted wake vortex.

Example 13: The method of example 12, wherein the radar return signal is a first radar return signal, the method further including: tracking, via the weather radar system, the aircraft; receiving, by the one or more antennae, a second radar return signal; and updating, by the processing circuitry and based on second radar return signal, the predicted position of the predicted wake vortex.

Example 14: The method of example 13, wherein the aircraft is a first aircraft, wherein the weather radar system is located on a second aircraft, wherein predicting the wake vortex of the first aircraft occurs while the second aircraft is in a flight phase.

Example 15: The method of example 14, wherein the one or more antennae is configured to transmit the radar signal and receive the radar return signal with at least a 160-degree field of regard relative to a forward direction of the second aircraft.

Example 16: The method of any one of examples 12-15, further including: determining, by the processing circuitry and based on the radar return signal, a range and a speed of the aircraft, wherein predicting the wake vortex of the aircraft and the predicted position of the predicted wake vortex is further based on the range and the speed of the aircraft.

Example 17: The method of any one of examples 12-16, further including: receiving, by the processing circuitry, a wind signal indicative of wind speed and direction proximate the aircraft; and updating, by the processing circuitry and based on the wind signal, the predicted position of the predicted wake vortex.

Example 18: The method of any one of examples 12-17, wherein the radar signal comprises a weather detection radar signal, the method further including: causing, by the processing circuitry, the one or more antenna to change from transmitting the weather detection radar signal to transmitting a vortex detection radar signal, wherein the radar return signal comprises a reflected or a scattered vortex detection radar signal; and outputting, by the processing circuitry, the predicted wake vortex and the predicted position of the wake vortex to a weather radar display.

Example 19: The method of example 18, wherein the vortex detection radar signal comprises at least one of a predictive windshear system (PWS) waveform, a high range resolution waveform, a direct short pulse waveform, a pulse compression waveform or a stepped frequency waveform.

Example 20: A non-transitory computer-readable medium including instructions for causing one or more processors to: detect an aircraft based on a radar return signal received by a weather radar system; in response to detecting the aircraft, determine, based on a strength of the radar return signal, a size of the aircraft; predict, based on the size of the aircraft, a wake vortex of the aircraft including a predicted position of the predicted wake vortex; and output the predicted wake vortex and the predicted position of the wake vortex to a weather radar display. In one or more examples, the circuitry described herein may utilize hardware, software, firmware, or any combination thereof for achieving the functions described. Those functions implemented in software may be stored on or transmitted over, as one or more instructions or code, a computer-readable medium and executed by a hardware-based processing unit. Computer-readable media may include computer-readable storage media, which corresponds to a tangible medium such as data storage media, or communication media including any medium that facilitates transfer of a computer program from one place to another, e.g., according to a communication protocol. In this manner, computer-readable media generally may correspond to (1) tangible computer-readable storage media which is non-transitory or (2) a communication medium such as a signal or carrier wave. Data storage media may be any available media that can be accessed by one or more computers or one or more processors to retrieve instructions, code and/or data structures for implementation of the techniques described in this disclosure.

Instructions may be executed by one or more processors. The one or more processors may, for example, include one or more DSPs, general purpose microprocessors, application specific integrated circuits ASICs, FPGAs, or other equivalent integrated or discrete logic circuitry. Accordingly, the term "processor," as used herein may refer to any of the foregoing structure or any other structure suitable for implementation of the techniques described herein. In addition, in some aspects, the functionality described herein may be provided within dedicated hardware and/or software modules configured for performing the techniques described herein. Also, the techniques could be fully implemented in one or more circuits or logic elements.

The techniques of this disclosure may be implemented in a wide variety of devices or apparatuses that include integrated circuits (ICs) or sets of ICs (e.g., chip sets). Various components, modules, or units are described in this disclosure to emphasize functional aspects of devices configured to perform the disclosed techniques, but do not necessarily require realization by different hardware units. Rather, various units may be combined or provided by a collection of interoperative hardware units, including one or more processors as described above, in conjunction with suitable software and/or firmware.

Various illustrative aspects of the disclosure are described above. These and other aspects are within the scope of the following claims.

## Claims

1. A weather radar system comprising:
one or more antennae configured to transmit a radar signal and receive a radar return signal; and
processing circuitry configured to:
detect an aircraft based on the radar return signal;
in response to detecting the aircraft, determine, based on a strength of the radar return signal, a size of the aircraft; and
predict, based on the size of the aircraft, a wake vortex of the aircraft including a predicted position of the predicted wake vortex.

2. The weather radar system of claim 1, wherein the radar return signal is a first radar return signal, wherein the processing circuitry is further configured to:
track, via the weather radar system, the aircraft;
receive a second radar return signal; and
update, based on second radar return signal, the predicted position of the predicted wake vortex.

3. The weather radar system of claim 1 or claim 2, wherein the aircraft is a first aircraft, wherein the weather radar system is located on a second aircraft.

4. The weather radar system of claim 3, wherein predicting the wake vortex of the first aircraft occurs while the second aircraft is in a flight phase.

5. The weather radar system of claim 4, wherein the one or more antennae is configured to transmit the radar signal and receive the radar return signal with at least a 160-degree field of regard relative to a forward direction of the second aircraft.

6. The weather radar system of any one of claims 1-5, wherein the processing circuitry is further configured to:
determine, based on the radar return signal, a range and a speed of the aircraft, wherein predicting the wake vortex of the aircraft and the predicted position of the predicted wake vortex is further based on the range and the speed of the aircraft.

7. The weather radar system of any one of claims 1-6, wherein the processing circuitry is further configured to:
receive a wind signal indicative of wind speed and direction proximate the aircraft; and
update, based on the wind signal, the predicted position of the predicted wake vortex.

8. The weather radar system of any one of claims 1-7, wherein the radar signal comprises a weather detection radar signal, wherein the one or more antennae is configured to transmit a vortex detection radar signal, wherein the processing circuitry is further configured to cause the one or more antennae to change from transmitting the weather detection radar signal to transmitting a vortex detection radar signal, wherein the radar return signal comprises a reflected or a scattered vortex detection radar signal.

9. The weather radar system of claim 8, wherein the vortex detection radar signal comprises at least one of a predictive windshear system (PWS) waveform, a high range resolution waveform, a direct short pulse waveform, a pulse compression waveform or a stepped frequency waveform.

10. The weather radar system of claim 8 or claim 9, wherein the aircraft is a first aircraft, wherein the weather radar and processing circuitry are located on a second aircraft, wherein the processing circuitry is configured to cause the one or more antennae to change from transmitting the weather detection radar signal to transmitting the vortex detection radar signal while the second aircraft has an altitude of less than or equal to 2,000 feet.

11. The weather radar system of any one of claims 1-10, wherein the processing circuitry is further configured to output the predicted wake vortex and the predicted position of the wake vortex to a weather radar display.

12. A method comprising:
transmitting, by one or more antennae of a weather radar system, a radar signal;
receiving, by the one or more antennae, a radar return signal;
detecting, by processing circuitry of the weather radar system and based on the radar return signal, an aircraft;
in response to detecting the aircraft, determining, by the processing circuitry and based on a strength of the radar return signal, a size of the aircraft; and
predicting, by the processing circuitry and based on the size of the aircraft, a wake vortex of the aircraft including a predicted position of the predicted wake vortex.

13. The method of claim 12, wherein the radar return signal is a first radar return signal, the method further comprising:
tracking, via the weather radar system, the aircraft;
receiving, by the one or more antennae, a second radar return signal; and
updating, by the processing circuitry and based on second radar return signal, the predicted position of the predicted wake vortex.

14. The method of claim 13, wherein the aircraft is a first aircraft, wherein the weather radar system is located on a second aircraft, wherein predicting the wake vortex of the first aircraft occurs while the second aircraft is in a flight phase.

15. A non-transitory computer-readable medium comprising instructions for causing one or more processors to:
detect an aircraft based on a radar return signal received by a weather radar system;
in response to detecting the aircraft, determine, based on a strength of the radar return signal, a size of the aircraft;
predict, based on the size of the aircraft, a wake vortex of the aircraft including a predicted position of the predicted wake vortex; and
output the predicted wake vortex and the predicted position of the wake vortex to a weather radar display.
